# EUROPEAN PATENT SPECIFICATION

(11) **EP 0 736 257 B1**
(45) Date of publication and mention of the grant of the patent: **12.07.2000**
(21) Application number: 96105490.5
(22) Date of filing: 04.04.1996
(51) Int. Cl.: A23G 3/02, A23G 7/00

(54) **Method and system for connecting molds on continuously operating molding lines, particularly for manufacturing confectionery products**
Verbindungssystem und -verfahren für Giessformen von Durchlaufformmaschine, insbesondere für Konfektformen
Procédé et dispositif de connection de moules sur une chaîne de moulage continue, en particulier pour confiserie

(30) Priority: 07.04.1995 IT TO950268
(43) Date of publication of application: 09.10.1996
(73) Proprietor: SOREMARTEC S.A., 6700 Arlon-Schoppach (BE)
(72) Inventor: Sobrero, Giovanni, 12050 Cerretto Langhe (IT)
(74) Representative: Boggio, Luigi

(56) References cited:
- DE-A- 2 536 727
- DE-A- 3 005 838
- DE-A- 4 128 905
- DE-C- 415 990
- FR-A- 2 130 689
- GB-A- 752 478
- GB-A- 1 109 099
- GB-A- 1 405 861
- PATENT ABSTRACTS OF JAPAN vol. 18, no. 296 (C-1209), 6 June 1994 & JP-A-06 062719 (AISAN SEISAKUSHO), 8 March 1994,

## Description

The present invention relates to a method of connecting molds on continuously operating molding lines, particularly for manufacturing confectionery products.

Confectionery products in general, and hollow confectionery products in particular, to which the following description refers purely by way of example, are formed on continuously operating molding lines with a mold connecting system comprising a conveyor, the transportation branch of which extends along the product molding path, and a number of molding devices connected integral with and traveling with the conveyor at substantially constant speed.

Each molding device comprises a metal frame connected integral with the conveyor; a mold fitted to the frame and in turn comprising two half molds, of which one is fixed and the other movable; a hinge assembly for enabling the movable half mold to rotate to and from the closed position in relation to the fixed half mold and about a hinge axis crosswise to the molding path; and a mechanical assembly for releasably locking the half molds in the closed position.

Though widely used, known systems of the above type present several drawbacks, all due to the presence and the particular design of the molding devices.

In particular, on account of the mold supporting frame and the hinge and lock assemblies, known molding devices are relatively heavy, thus resulting in considerable power consumption and hence high running costs.

For the same reasons, known molding devices are of relatively complex design, and normally require routine servicing to ensure accurate mutual positioning and reliable locking of the half molds. The complex design of the devices also complicates removal of the half molds from the frame, and routine cleaning and maintenance of the molds; and, since the frames and associated hinge and lock assemblies are designed for a particular mold and hence a specific type of product, known molding devices fail to provide for a rapid changeover in production.

Moreover, as the molding cycle comprises one or more mold heating and one or more mold cooling stages, the frame and, in general, all the associated members for fastening and operating the half molds are periodically heated and cooled, so that part of the heat supplied plays absolutely no part in the actual process, and simply serves to periodically heat the frame and increase running costs.

Finally, on account of the metal frame and the assemblies for connecting the half molds to the frame and locking the frames to one another, known systems present an extremely high noise level, particularly when the devices are operated at high speed.

Alternatively, confectionery products are also produced on discontinuous molding lines on which the half molds are fed successively in steps along the molding path, and are arrested at a turnover station where they are turned over and closed to form the respective molds.

Such lines also present several drawbacks, all due to the low output speed obtainable, and are therefore limited to small-scale applications.

It is an object of the present invention to provide a straightforward, low-cost method of connecting molds on continuously operating molding lines, designed to overcome the aforementioned drawbacks, and which in particular provides for high output speeds and for considerably faster maintenance and changeover in production as compared with known methods.

According to the present invention, there is provided a method of connecting molds on continuously operating molding lines, particularly for manufacturing confectionery products; the method comprising the steps of feeding at least a first and second half mold continuously along a molding path via conveyor means; and moving the half molds, as they are fed forward, in relation to each other and to and from a closed position in which the half molds are connected to define the mold of said products; characterized in that the half molds are fed forward by positively and releasably connecting at least said first half mold directly to said conveyor means; and the half molds are moved into said closed position by disconnecting, as the half molds are fed forward, at least the first half mold from said conveyor means, and connecting the first half mold to the second half mold.

It is a further object of the present invention to provide a system for connecting molds on continuously operating molding lines, particularly for manufacturing confectionery products.

According to the present invention, there is provided a system for connecting molds on continuously operating molding lines, particularly for manufacturing confectionery products; each mold comprising a first and second half mold; and the system comprising conveyor means for feeding said half molds continuously along a molding path; and operating means for moving the half molds, as they are fed forward, in relation to each other and to and from a closed position in which the half molds are connected to define said mold; characterized in that it comprises first connecting means for positively and releasably connecting the first half mold directly to said conveyor means; actuating means being provided for moving said first connecting means, as the half molds are fed forward, between a connected position, and a release position in which said first half mold is released from said conveyor means.

A non-limiting embodiment of the present invention will be described by way of example with reference to the accompanying drawings, in which:
Figure 1 shows a schematic plan view, with parts removed for clarity, of a molding line featuring a mold connecting system in accordance with the teachings of the present invention;
Figure 2 shows a view in perspective of the Figure 1 system;
Figure 3 shows a plan view of a Figure 2 detail in two different operating positions;
Figure 4 shows a view in the direction of arrow A in Figure 3;
Figure 5 shows a section, with parts removed for clarity, along line V-V in Figure 3;
Figure 6 shows the same view as in Figure 5 of a Figure 5 detail in a different operating position;
Figure 7 shows a larger-scale partial section along line VII-VII in Figure 1;
Figure 8 shows a larger-scale section along line VIII-VIII in Figure 3.

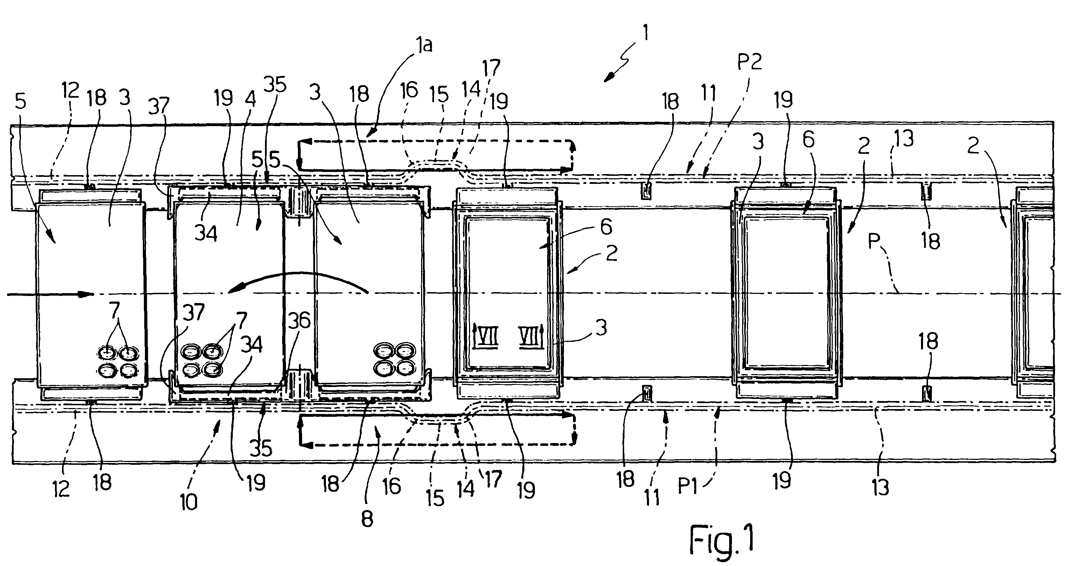

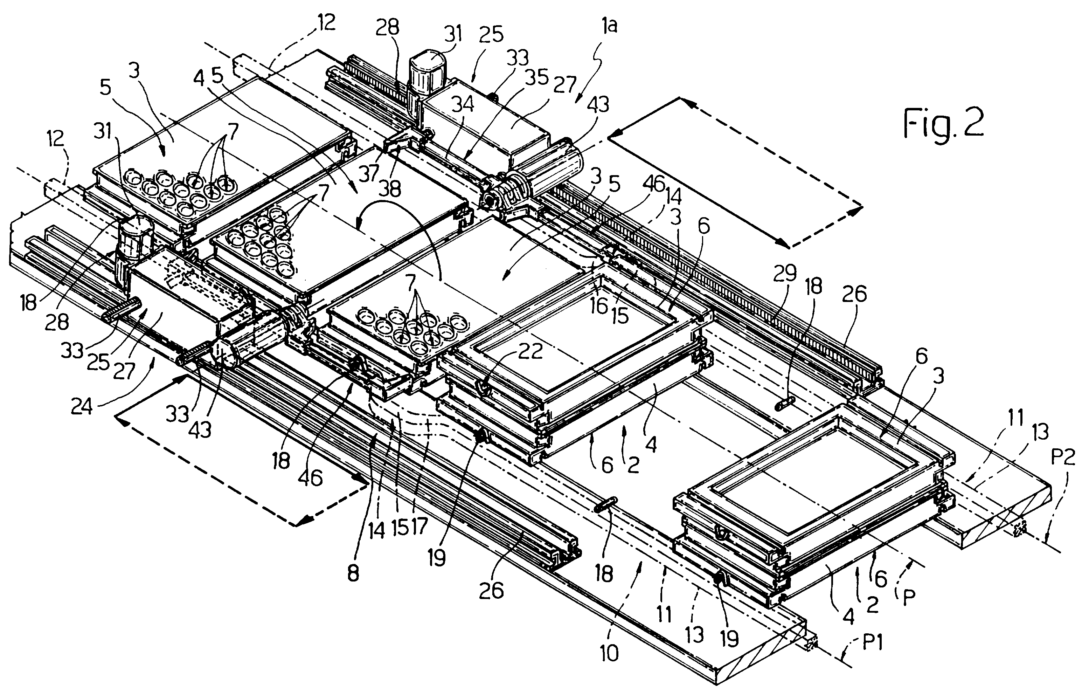

With reference to Figures 1 and 2, number 1 indicates a molding line for confectionery products (not shown), in particular hollow confectionery products, which are formed or molded inside respective molds 2, each comprising a first and second half mold 3 and 4 identical to each other and preferably rectangular in shape.

Each half mold 3, 4 is defined at the top and bottom by respective flat surfaces 5 and 6, and presents a number of cavities 7 formed in surface 5 and for receiving a fluid confectionery mixture (not shown) at a filling station (not shown). Half molds 3 and 4 are fed successively and continuously along a molding path P extending through a closing station 8 where each half mold 3 is superimposed on a respective half mold 4 to define respective mold 2 which presents a number of chambers 9 (Figure 7) for forming respective products, and is fed along path P at the same speed at which half molds 3 and 4 are fed to the input of station 8.

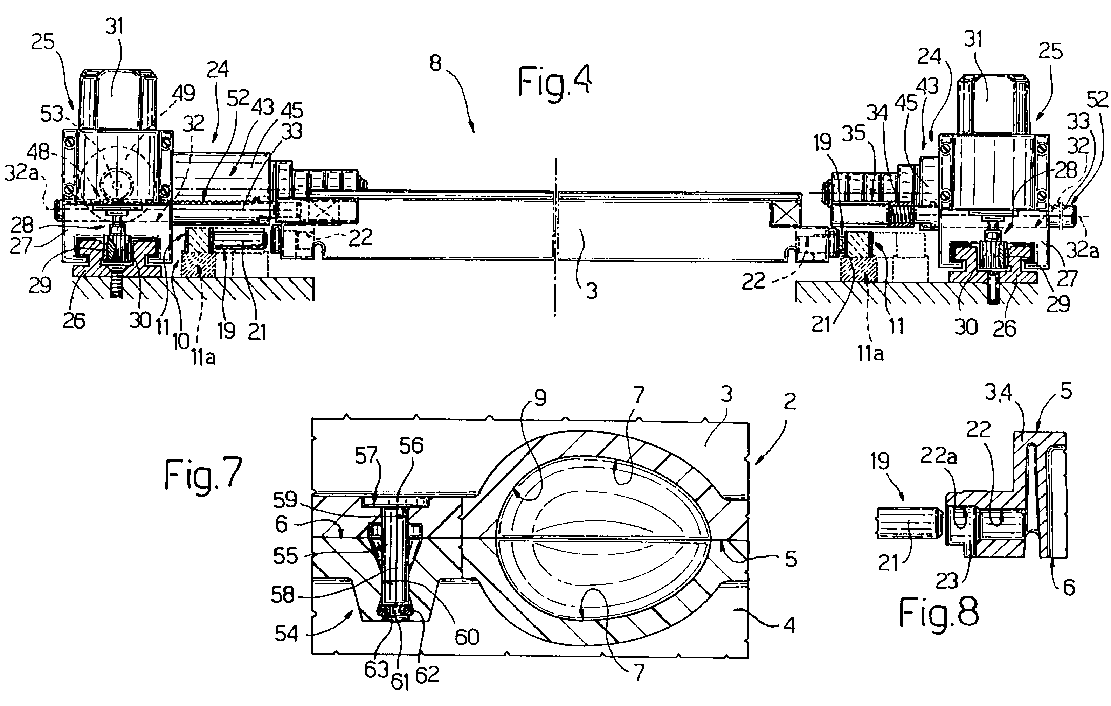

Line 1 comprises a system 1a for connecting molds 2, and in turn comprising a powered conveyor 10 presenting two chains 11 located on either side of path P and guided, by a known guide device 11a (Figure 4), along respective paths P1, P2 (Figure 1). Each path P1, P2 comprises two straight portions 12 and 13 extending on either side of station 8 and parallel to path P; and an intermediate bend 14 extending inside station 8 and with its concavity facing bend 14 of the other path P1, P2.

Each bend 14 preferably comprises a substantially straight or curved intermediate portion 15; and a substantially S-shaped input portion 16 and output portion 17, which connect intermediate portion 15 to respective portions 12 and 13.

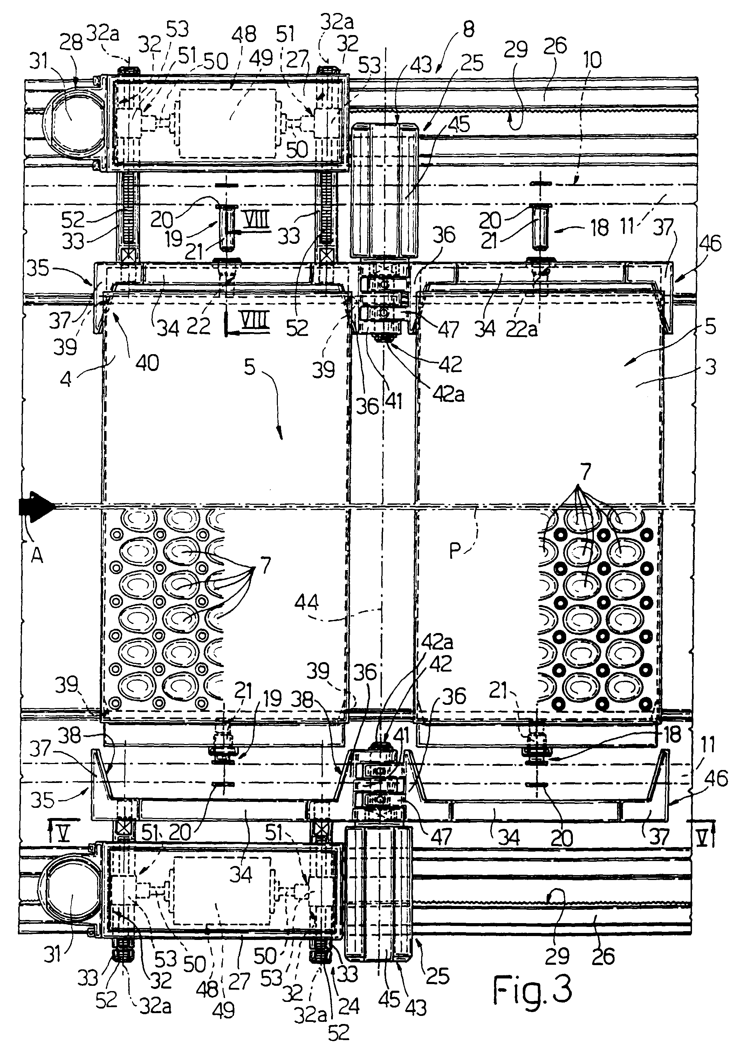

Half molds 3 and 4 are connected to chains 11 by a first and second pair of pins 18 and 19 respectively. The pins in each pair project coaxially towards each other and perpendicularly to path P, and each comprise a head 20 (Figure 3) fitted integral with chain 11, and a stem 21 terminating in a tapered or rounded portion.

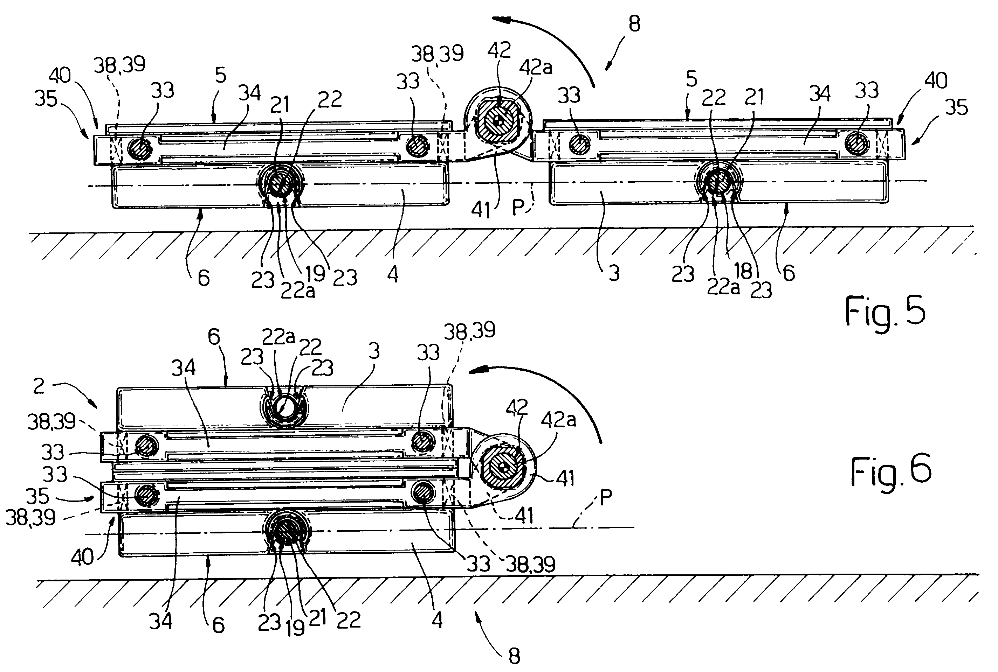

The stem 21 of each pin 18, 19 engages in rotary and axially sliding manner a respective seat 22 (Figures 3, 5, 6, 8) formed in a lateral wall of half mold 3, 4 and presenting a flared inlet portion 22a defining, in use, an inlet for respective pin 18, 19. More specifically, and as shown in Figures 5, 6 and 8, each inlet portion 22a is defined laterally by a pair of flat surfaces 23 diverging towards the bottom surface 6 of half mold 3, 4.

With reference to Figures 2, 3 and 4, system 1a also comprises an assembly 24 for operating half molds 3 and 4, and housed movably inside station 8 for successively engaging half molds 3 at the input of station 8, turning each half mold 3 over on to the adjacent half mold 4 upstream in the traveling direction of half molds 3 and 4, and feeding the mold 2 so formed to the output of station 8.

Assembly 24 comprises two identical gripping and retaining devices 25 located on either side of conveyor 10, and each comprising a fixed straight guide 26 extending parallel to path P and externally adjacent to respective bend 14 (Figure 4).

Each of guides 26 is fitted in axially sliding manner with a respective slide 27 which is moved both ways by a respective preferably rack and pinion type drive assembly 28 comprising a rack 29 integral with guide 26, and a pinion 30 fitted to slide 27 and driven by an electric motor 31 (Figures 2, 3, 4).

With reference to Figures 3 and 4, each slide 27 presents two cylindrical seats 32 with their respective axes 32a perpendicular to guide 26, and which are formed above guide 26 and engaged in axially sliding manner by respective rods 33. Rods 33 each extend above chain 11, and the respective end portions of the rods facing the end portions of the rods on the other device 25 are connected integral with a crosspiece 34 of a fork member 35.

Each member 35 also comprises two arms 36 and 37 (Figure 3) integral with the opposite ends of crosspiece 34 and projecting towards the arms 36 and 37 of the other fork member 35.

Arms 36, 37 of each member 35 are defined internally by respective flat surfaces 38 converging towards crosspiece 34 and which cooperate, in use, with respective complementary flat surfaces 39 formed at the corners of half molds 4. Together with surfaces 39, arms 36 and 37 and respective surfaces 38 define an inclined-surface positioning device 40 for adjusting, in use, the position of fork members 35 in relation to half molds 3 and 4 in two incident directions respectively parallel and perpendicular to path P.

As shown in Figure 3, by means of a comblike element 41, each arm 36 is connected in rotary and axially fixed manner to the end portion 42a of the output shaft 42 of a respective electric motor 43. The axis 44 of shaft 42 is perpendicular to path P, is aligned with axis 44 of the other shaft 42, and lies in the horizontal plane along which surfaces 5 of half molds 3, 4 travel.

The outer casing 45 of each motor 43 is connected in axially sliding and angularly fixed manner to an end portion of respective slide 27, and each motor 43 forms part of respective device 25, which also comprises a further fork member 46 of the same design and size as member 35. More specifically, each fork member 46 presents arms 36 and 37 for positively engaging a respective half mold 3, and of which arm 36 is fitted by a fork 47 to portion 42a of shaft 42. By means of respective motor 43, member 46 is rotated, about axis 44 and in relation to corresponding member 35, between an open or pickup position (Figure 5) wherein arms 36 and 37 of both members 35 and 46 extend coplanar with one another and facing half molds 3 and 4 on diametrically opposite sides of respective shaft 42, and a closed position (Figure 6) wherein arms 36 and 37 of member 46 extend parallel to and over arms 36 and 37 of member 35.

Each device 25 also comprises an actuator assembly 48 (Figures 3, 4) for simultaneously moving both fork members 35 and 46 in a direction parallel to axis 44, and between a withdrawn idle position (Figure 2 and the bottom part of Figure 3) wherein arms 36 and 37 extend outwards of half molds 3 and 4, and a forward operating position (Figure 1 and the top part of Figure 3) wherein surfaces 38 of arms 36 and 37 contact corresponding surfaces 39 of half molds 3 and 4, and members 35 and 46 lock half molds 3 and 4 in relation to each other in a given reference position.

As shown in Figure 3, assembly 48 preferably comprises an electric motor 49 fitted to respective slide 27 and presenting two opposed output shafts 50, and two rack and pinion transmissions 51, each presenting a rack 52 connected integral with a respective rod 33, and a pinion 53 meshing with respective rack 52 and fitted to a respective output shaft 50 of motor 49.

With reference to Figure 7, when placed one on top of the other to define respective mold 2, half molds 3 and 4 are locked releasably in relation to each other by a number of spaced connecting devices 54.

Each device 54 is a snap-on connecting device, and preferably comprises a pin 55 fitted to half mold 3 and in turn presenting a stem 58, and a head 56 which cooperates, in use, with a shoulder 57 formed on half mold 3. In use, stem 58 engages, in axially sliding manner, through channels 59 and 60 formed respectively in half molds 3 and 4, and presents an outer annular groove 61 formed on the free end portion of stem 58 opposite head 56, and engaged by a retaining ring 62 which, in use, snaps inside an inner annular seat 63 formed coaxially with channel 60 in half mold 4.

Operation of system 1a will now be described, for the sake of simplicity, with reference to one mold 2, and as of the condition in which half molds 3 and 4 are fed along path P to station 8 at substantially constant speed, both devices 25 are located close to the input of station 8, and respective members 35 and 46 are set to the withdrawn open position.

As of the above condition, as half molds 3 and 4 approach the input of station 8, and respective hinge pins 18 and 19 traveling along respective portions 12 approach respective bends 14, motors 31 are first activated to position members 35, 46 so that they correspond with half molds 3, 4, and are then speed controlled so as to feed members 35, 46 in the same direction and at the same speed as half molds 3 and 4. At this point, both motors 49 are activated to move members 35 and 46, by means of transmissions 51, towards half molds 3 and 4 and into the forward operating position in which they surround and maintain half molds 3 and 4 in fixed positions in relation to each other. As members 35 and 46 are moved into the forward operating position, surfaces 38 cooperate gradually with surfaces 39 of half molds 3 and 4 to gradually adjust the position of members 35 and 46 in relation to half molds 3 and 4.

At this point, as heads 20 of pins 18 travel along input portions 16 of respective bends 14, stems 21 of pins 18 are gradually withdrawn from respective seats 22, after which, motors 43 are activated to rotate respective members 46, and the half mold 3 gripped between them, anticlockwise (in Figure 5) about axis 44 and into the closed position in which half mold 3 is positioned on top of and closes half mold 4. Half molds 3 and 4 are then connected to each other by feeding pins 55 into half mold 4 so that rings 62 snap inside respective seats 63.

As half mold 3 is turned over to form mold 2, pins 19 also engage and travel along portions 16 of respective bends 14 and, like pins 18, are also withdrawn from respective seats 22 to fully release mold 2 from conveyor 10. At this point, pins 19 travel along respective bends 14, and mold 2, supported solely by members 35 and 46, is fed along path P by speed controlling motors 31. Upon pins 19 engaging and traveling along portions 17 of bends 14, they are once more moved back gradually to their original position engaging seats 22 of half mold 4 which, in the meantime, has been fed by motors 31, together with half mold 3, along path P at a speed synchronized with pins 19.

At this point, mold 2, once more connected to conveyor 10, is moved forward by the conveyor; motors 49 are again activated, but in reverse, to withdraw members 35 and 46; motors 31 and 43 are then activated simultaneously to restore members 35 and 46 to the open position close to the input of station 8 pending the arrival of the next pair of half molds 3, 4; and the above operations are then repeated in the same order.

By virtue of connecting half molds 3 and 4 directly to conveyor 10 with no interface element, system 1a, as compared with known systems, therefore provides for greatly reducing the number and weight of the moving bodies involved and hence not only the cost of producing the system but also the power required for moving the bodies along path P.

What is more, directly connecting half molds 3 and 4 to conveyor 10 also provides for greatly reducing the amount of heat supplied and withdrawn, in that, in system 1a, only half molds 3 and 4 are heated and cooled.

By virtue of half molds 3 and 4 being connected to conveyor 10 by releasable hinge devices, and conveyor 10 comprising only two chains 11, removal of half molds 3 and 4 from conveyor 10 is extremely rapid and such as to greatly simplify not only routine maintenance and cleaning of half molds 3, 4, but also any changes in production. Half molds 3 and 4, in fact, may be disconnected from conveyor 10 by simply parting chains 11, and may be removed successively and immediately replaced with other half molds at a single mold change station.

As compared with known systems, system 1a is extremely silent operating, especially at high traveling speeds of half molds 3 and 4, and therefore requires fewer noise damping provisions, by virtue of featuring no relatively moving metal parts and, in particular, no mutually sliding metal elements interposed, for example, between conveyor 10 and half molds 3, 4. One of the elements of the hinges connecting the half molds, in fact, actually forms part of the half mold itself which is made of plastic material.

By virtue of half molds 3 and 4 being connected directly to conveyor 10 by straightforward releasable hinges, and the hinges themselves comprising straightforward axially-moving pins 18, 19 engaging respective seats formed directly in half molds 3 and 4, system 1a is extremely straightforward in design, highly reliable, and relatively cheap to produce and run.

From the operating standpoint, hinging half molds 3 and 4 directly and releasably to conveyor 10 provides for greater space saving as compared with known systems, by greatly reducing the distance, for example, between one half mold and the next, and hence, for a given traveling speed of half molds 3, 4, for achieving a further increase in output which in itself is already high by virtue of the half molds being advanced continuously.

The ease with which half molds 3 and 4 are disconnected from conveyor 10 also enables them to be diverted from path P during the molding process, and fed along alternate control paths where they may be controlled and, for example, weighed continuously.

Clearly, changes may be made to system 1a as described and illustrated herein without, however, departing from the scope of the present invention.

In particular, conveyor 10 may be replaced by a different type of conveyor; and the half molds may be connected to the conveyor using different releasable connecting devices.

Also, half molds 3 and 4 may be connected to and disconnected from conveyor 10 differently from the manner described. In particular, chains 11 may be guided along respective paths, for example, parallel to path P; half molds 3 and 4 may be guided, at least in station 8, by fixed guides parallel to chains 11; pins 18 and 19 may be connected to the chains in axially sliding manner, and operated, in station 8, by cam devices of which pins 18 and 19 constitute the tappet elements; and pins 19 may present heads differing from those of pins 18 and such as not to interfere with the cam devices when traveling through station 8.

## Claims

1. A method of connecting molds on continuously operating molding lines, particularly for manufacturing confectionery products; the method comprising the steps of feeding at least a first (3) and second (4) half mold continuously along a molding path (P) via conveyor means (10); and moving the half molds (3)(4), as they are fed forward, in relation to each other and to and from a closed position in which the half molds (3)(4) are connected to define the mold (2) of said products; characterized in that the half molds (3)(4) are fed forward by positively and releasably connecting at least said first half mold (3) directly to said conveyor means (10); and the half molds (3)(4) are moved into said closed position by disconnecting, as the half molds (3)(4) are fed forward, at least the first half mold (3) from said conveyor means, and connecting the first half mold (3) to the second half mold (4).

2. A method as claimed in Claim 1, characterized in that said half molds (3)(4) are fed forward by connecting both the half molds (3)(4) directly and releasably to said conveyor means (10).

3. A method as claimed in Claim 1 or 2, characterized in that said half molds (3)(4) are fed forward by hinging at least said first half mold (3) directly to said conveyor means (10) via releasable hinge means (18, 22).

4. A method as claimed in Claim 3, characterized in that said half molds (3)(4) are fed forward by hinging both the half molds (3)(4) directly to said conveyor means (10).

5. A method as claimed in any one of the foregoing Claims, characterized in that said conveyor means comprise two elongated conveyor elements (11); and said first half mold (3) is disconnected from said conveyor means (10) by varying the distance between said elongated elements (11) in a direction (44) crosswise to said path (P).

6. A method as claimed in Claim 5, characterized in that, prior to disconnecting said first half mold (3) from said conveyor means (10), it comprises an operation for securing said first (3) and second (4) half molds in relation to each other via gripping and retaining means (24).

7. A method as claimed in Claim 6, characterized in that it also comprises the step of adjusting the position of said gripping and retaining means (24) in relation to said half molds (3)(4) in two incident directions.

8. A method as claimed in Claim 7, characterized in that said adjusting step is performed during said operation for securing the half molds (3)(4) in relation to each other.

9. A method as claimed in any one of the foregoing Claims, characterized in that the first half mold (3) is connected to the second half mold (4) by rotating the first half mold (3) about an axis (44) crosswise to said path (P).

10. A method as claimed in any one of the foregoing Claims, characterized in that it comprises the step of locking the half molds (3)(4) in relation to each other when they are in the closed position.

11. A method as claimed in any one of the foregoing Claims, characterized in that, subsequent to the formation of said mold (2), it comprises a first step for disconnecting the mold (2) from said conveyor means (10), and a subsequent second step for reconnecting the mold (2) to said conveyor means (10).

12. A system (1a) for connecting molds on continuously operating molding lines, particularly for manufacturing confectionery products; each mold (2) comprising a first (3) and second (4) half mold; and the system (1a) comprising conveyor means (10) for feeding said half molds (3)(4) continuously along a molding path (P); and operating means (24) for moving the half molds (3)(4), as they are fed forward, in relation to each other and to and from a closed position in which the half molds (3)(4) are connected to define said mold (2); characterized in that it comprises first connecting means (18, 22) for positively and releasably connecting the first half mold (3) directly to said conveyor means (10); actuating means (11, 11a) being provided for moving said first connecting means (18, 22), as the half molds (3)(4) are fed forward, between a connected position, and a release position in which said first half mold (3) is released from said conveyor means (10) and in which the half molds are in the closed position.

13. A system as claimed in Claim 12, characterized in that it comprises second connecting means (19, 22) for positively and releasably connecting the second half mold (4) directly to said conveyor means (10); said actuating means (11, lla) providing, in use, for moving said second connecting means (19, 22) between a respective connected position, and a respective release position in which the second half mold (4) is released from said conveyor means (10).

14. A system as claimed in Claim 13, characterized in that said first connecting means (18, 22) are hinge connecting means.

15. A system as claimed in Claim 14, characterized in that said second connecting means (19, 22) are hinge connecting means.

16. A system as claimed in any one of the foregoing Claims from 13 to 15, characterized in that said conveyor means (10) comprise only two elongated conveyor elements (11); said first (18, 22) and second (19, 22) connecting means being associated with said elongated elements (11); and said actuating means (11, lla) comprising said elongated elements (11), and guide means (lla) for varying the distance between the elongated elements (11) in a direction (44) crosswise to said path (P), and for moving at least the first connecting means (18, 22) between said connected and release positions.

17. A system as claimed in Claims 15 and 16, characterized in that said first (18, 22) and second (19, 22) connecting means respectively comprise a first and second pair of hinge pins (18)(19), the pins (18, 19) in each pair being located on either side of said path (P), and each pin being fitted to a respective said half mold (3)(4) or a respective said elongated conveyor element (11); said first (18, 22) and second (19, 22) connecting means also comprising, for each pair of pins (18)(19), a pair of retaining seats (22), each of which is engaged positively by a respective said hinge pin (18)(19), and is formed on a respective said elongated conveyor element (11) or a respective said half mold (3)(4).

18. A system as claimed in Claim 17, characterized in that the pins (18)(19) in each pair are aligned with each other, extend crosswise to said path (P), and are each connected integral with a respective said elongated conveyor element (11).

19. A system as claimed in Claim 17 or 18, characterized in that each said seat (22) presents a flared inlet portion (22a) defining, in use, the inlet for a respective hinge pin (18)(19).

20. A system as claimed in any one of the foregoing Claims from 12 to 19, characterized in that it comprises a station (8) for closing said first (3) and second (4) half molds, and located along said path (P); and said operating means (24) are located at said closing station (8).

21. A system as claimed in Claim 20, characterized in that said operating means (24) comprise gripping and retaining means (35, 46) for securing said half molds (3)(4) in relation to each other; and first drive means (28, 31) for moving said gripping and retaining means (35, 46) parallel to said path (P).

22. A system as claimed in Claim 21, characterized in that said operating means (24) also comprise relative positioning means (40) for adjusting the position of said gripping and retaining means (35, 46) in relation to said half molds (3)(4) in two incident directions.

23. A system as claimed in Claim 22, characterized in that said positioning means comprise a device (40) with inclined surfaces.

24. A system as claimed in one of the foregoing Claims from 21 to 23, characterized in that, for each half mold, said gripping and retaining means comprise a pair of fork members (35)(46) on either side of said path (P); second drive means (48) being provided for moving the fork members (35)(46) in each pair in opposite directions to and from a forward retaining position.

25. A system as claimed in Claim 24, characterized in that said operating means (24) also comprise further hinge means (41, 42, 47) for connecting said pairs of fork members (35)(46) to each other; said further hinge means (41, 42, 47) presenting a further hinge axis (44) crosswise to said path (P); and third drive means (43) being provided for rotating one of said pairs of fork members (35)(46) in relation to the other and about said further hinge axis (44), and for connecting said first half mold (3) to said second half mold (4).

26. A system as claimed in any one of the foregoing Claims from 12 to 25, characterized in that it comprises further releasable connecting means (54) for connecting said half molds (3)(4) in said closed position; said further releasable connecting means (54) being formed on said half molds (3)(4).

## Patentansprüche

1. Verfahren zum Verbinden von Formen in kontinuierlich betreibbaren Formungsstrecken, insbesondere für die Herstellung von Konditoreiprodukten; wobei das Verfahren die folgenden Schritte umfaßt: kontinuierliches Transportieren wenigstens einer ersten (3) und einer zweiten (4) Halbform längs eines Formungswegs (P) mittels Transporteinrichtungen (10); und Bewegen der Halbformen (3)(4), wenn sie vorwärts transportiert werden, relativ zueinander und in eine geschlossene Stellung, in der die Halbformen (3)(4) verbunden sind, um die Form (2) der Produkte zu definieren, und aus dieser geschlossenen Stellung; dadurch gekennzeichnet, daß die Halbformen (3)(4) durch zwangsläufiges und lösbares direktes Verbinden wenigstens der ersten Halbform (3) mit den Fördereinrichtungen (10) vorwärts transportiert werden; und die Halbformen (3)(4) in die geschlossene Stellung bewegt werden, indem wenigstens die erste Halbform (3) von den Fördereinrichtungen getrennt wird, wenn die Halbformen (3)(4) vorwärts transportiert werden, und indem die erste Halbform (3) mit der zweiten Halbform (4) verbunden wird.

2. Verfahren nach Anspruch 1, dadurch gekennzeichnet, daß die Halbformen (3)(4) durch direktes und lösbares Verbinden beider Halbformen (3)(4) mit der Fördereinrichtung (10) vorwärts transportiert werden.

3. Verfahren nach Anspruch 1 oder 2, dadurch gekennzeichnet, daß die Halbformen (3)(4) durch direktes Anlenken wenigstens der ersten Halbform (3) an der Fördereinrichtung (10) mittels lösbarer Gelenkeinrichtungen (18, 22) vorwärts transportiert werden.

4. Verfahren nach Anspruch 3, dadurch gekennzeichnet, daß die Halbformen (3)(4) durch direktes Anlenken beider Halbformen (3)(4) an den Fördereinrichtungen (10) vorwärts transportiert werden.

5. Verfahren nach einem der vorhergehenden Ansprüche, dadurch gekennzeichnet, daß die Fördereinrichtungen zwei langgestreckte Förderelemente (11) umfassen; und die erste Halbform (3) von den Fördereinrichtungen (10) getrennt wird, indem der Abstand zwischen den langgestreckten Elementen (11) in einer Richtung (44) quer zum Weg (P) geändert wird.

6. Verfahren nach Anspruch 5, dadurch gekennzeichnet, daß es vor dem Trennen der ersten Halbform (3) von den Fördereinrichtungen (10) eine Operation zum Befestigen der ersten (3) und zweiten (4) Halbformen relativ zueinander mittels Greif- und Halteeinrichtungen (24) umfaßt.

7. Verfahren nach Anspruch 6, dadurch gekennzeichnet, daß es den Schritt des Einstellens der Position der Greif- und Halteeinrichtungen (24) relativ zu den Halbformen (3)(4) in zwei Auftreffrichtungen umfaßt.

8. Verfahren nach Anspruch 7, dadurch gekennzeichnet, daß der Einstellschritt während der Operation des Befestigens der Halbformen (3)(4) relativ zueinander ausgeführt wird.

9. Verfahren nach einem der vorhergehenden Ansprüche, dadurch gekennzeichnet, daß die erste Halbform (3) mit der zweiten Halbform (4) durch Drehen der ersten Halbform (3) um eine Achse (44) quer zum Weg (P) verbunden wird.

10. Verfahren nach einem der vorhergehenden Ansprüche, dadurch gekennzeichnet, daß es den Schritt des Verriegelns der Halbformen (3)(4) relativ zueinander, wenn sie in der geschlossenen Stellung sind, umfaßt.

11. Verfahren nach einem der vorhergehenden Ansprüche, dadurch gekennzeichnet, daß es nach der Bildung der Form (2) einen ersten Schritt des Trennens der Form (2) von den Fördereinrichtungen (10) und einen nachfolgenden zweiten Schritt des erneuten Verbindens der Form (2) mit den Fördereinrichtungen (10) umfaßt.

12. System (1a) zum Verbinden von Formen in kontinuierlich betreibbaren Formungsstrecken, insbesondere für die Herstellung von Konditoreiprodukten; wobei jede Form (2) eine erste (3) und eine zweite (4) Halbform umfaßt; und das System (1a) Fördereinrichtungen (10) zum kontinuierlichen Transportieren der Halbformen (3)(4) längs eines Formungswegs (P); und Arbeitseinrichtungen (24) zum Bewegen der Halbformen (3)(4), wenn sie vorwärts transportiert werden, relativ zueinander und in eine geschlossene Stellung, in der die Halbformen (3)(4) verbunden sind, um die Form (2) zu definieren, und aus dieser geschlossenen Stellung; dadurch gekennzeichnet, daß es erste Verbindungseinrichtungen (18, 22) zum zwangsläufigen und lösbaren direkten Verbinden der ersten Halbform (3) mit den Fördereinrichtungen (10) umfaßt, wobei Betätigungseinrichtungen (11, lla) vorgesehen sind, um die ersten Verbindungseinrichtungen (18, 22) zwischen einer verbundenen Stellung und einer gelösten Stellung, in der die erste Halbform (3) von den Fördereinrichtungen (10) gelöst ist und in der sich die Halbformen in der geschlossenen Stellung befinden, zu bewegen, wenn die Halbformen (3)(4) vorwärts transportiert werden.

13. System nach Anspruch 12, dadurch gekennzeichnet, daß es zweite Verbindungseinrichtungen (19, 22) zum zwangsläufigen und lösbaren direkten Verbinden der zweiten Halbform (4) mit den Fördereinrichtungen (10) umfaßt; wobei die Betätigungseinrichtungen (11, lla) im Gebrauch die zweiten Verbindungseinrichtungen (19, 22) zwischen einer jeweiligen verbundenen Stellung und einer jeweiligen gelösten Stellung, in der die zweite Halbform (4) von den Fördereinrichtungen (10) gelöst ist, bewegen.

14. System nach Anspruch 13, dadurch gekennzeichnet, daß die ersten Verbindungseinrichtungen (18, 22) Gelenkverbindungseinrichtungen sind.

15. System nach Anspruch 14, dadurch gekennzeichnet, daß die zweiten Verbindungseinrichtungen (19, 22) Gelenkverbindungseinrichtungen sind.

16. System nach einem der Ansprüche 13 bis 15, dadurch gekennzeichnet, daß die Fördereinrichtungen (10) nur zwei langgestreckte Förderelemente (11) enthalten; wobei die ersten (18, 22) und zweiten (19, 22) Verbindungseinrichtungen den langgestreckten Elementen (11) zugeordnet sind; und die Betätigungseinrichtungen (11, lla) die langgestreckten Elemente (11) sowie Führungseinrichtungen (lla) zum Ändern des Abstandes zwischen den langgestreckten Elementen (11) in einer Richtung (44) quer zum Weg (P) und zum Bewegen wenigstens der ersten Verbindungseinrichtungen (18, 22) zwischen der verbundenen und der gelösten Stellung umfassen.

17. System nach Anspruch 15 und 16, dadurch gekennzeichnet, daß die ersten (18, 22) und zweiten (19, 22) Verbindungseinrichtungen ein erstes bzw. ein zweites Paar Gelenkstifte (18) (19) umfassen, wobei sich die Stifte (18) (19), in jedem Paar beiderseits des Wegs (P) befinden und jeder Stift in eine entsprechende Halbform (3)(4) oder in ein entsprechendes langgestrecktes Förderelement (11) eingesetzt ist; wobei die ersten (18, 22) und zweiten (19, 22) Verbindungseinrichtungen außerdem für jedes Paar Stifte (18) (19) ein Paar Haltesitze (22) aufweisen, wovon jeder zwangsläufig mit einem entsprechenden Gelenkstift (18) (19) in Eingriff ist und an einem entsprechenden langgestreckten Förderelement (11) oder an einer entsprechenden Halbform (3)(4) ausgebildet ist.

18. System nach Anspruch 17, dadurch gekennzeichnet, daß die Stifte (18) (19) in jedem Paar aufeinander ausgerichtet sind, sich quer zum Weg (P) erstrecken und jeweils mit einem entsprechenden langgestreckten Förderelement (11) einteilig verbunden sind.

19. System nach Anspruch 17 oder 18, dadurch gekennzeichnet, daß jeder Sitz (22) einen erweiterten Einlaßabschnitt (22a) aufweist, der im Gebrauch den Einlaß für einen entsprechenden Gelenkstift (18, 19) definiert.

20. System nach einem der vorhergehenden Ansprüche 12 bis 19, dadurch gekennzeichnet, daß es eine Station (8) aufweist, die die ersten (3) und zweiten (4) Halbformen verschließt und sich im Weg (P) befindet; und die Arbeitseinrichtungen (24) sich in der Verschließstation (8) befinden.

21. System nach Anspruch 20, dadurch gekennzeichnet, daß die Arbeitseinrichtungen (24) Greif- und Halteeinrichtungen (35, 46) zum Befestigen der Halbformen (3)(4) relativ zueinander; sowie erste Antriebseinrichtungen (28, 31) zum Bewegen der Greif- und Halteeinrichtungen (35, 46) parallel zum Weg (P) umfassen.

22. System nach Anspruch 21, dadurch gekennzeichnet, daß die Arbeitseinrichtungen (24) außerdem Relativpositionierungseinrichtungen (40) zum Einstellen der Position der Greif- und Halteeinrichtungen (35, 46) relativ zu den Halbformen (3)(4) in zwei Auftreffrichtungen umfassen.

23. System nach Anspruch 22, dadurch gekennzeichnet, daß die Positionierungseinrichtungen eine Vorrichtung (40) mit geneigten Flächen umfassen.

24. System nach einem der vorhergehenden Ansprüche 21 bis 23, dadurch gekennzeichnet, daß die Greif- und Halteeinrichtungen für jede Halbform ein Paar Gabelelemente (35) (46) beiderseits des Wegs (P) enthalten; wobei zweite Antriebseinrichtungen (48) vorgesehen sind, um die Gabelelemente (35) (46) in jedem Paar in entgegengesetzten Richtungen in eine vordere Haltestellung und aus dieser vorderen Haltestellung zu bewegen.

25. System nach Anspruch 24, dadurch gekennzeichnet, daß die Arbeitseinrichtungen (24) außerdem weitere Gelenkeinrichtungen (41, 42, 47) umfassen, um die Paare von Gabelelementen (35) (46) miteinander zu verbinden; wobei die weiteren Gelenkeinrichtungen (41, 42, 47) eine weitere Gelenkachse (44) quer zum Weg (P) aufweisen; und dritte Antriebseinrichtungen (43) vorgesehen sind, um eines der Paare von Gabelelementen (35) (46) relativ zum anderen und um die weitere Gelenkachse (44) zu drehen und um die erste Halbform (3) mit der zweiten Halbform (4) zu verbinden.

26. System nach einem der vorhergehenden Ansprüche 12 bis 25, dadurch gekennzeichnet, daß es ferner lösbare Verbindungseinrichtungen (54) zum Verbinden der Halbformen (3)(4) in der geschlossenen Stellung umfaßt; wobei die weiteren lösbaren Verbindungseinrichtungen (54) an den Halbformen (3)(4) ausgebildet sind.

## Revendications

1. Procédé pour connecter des moules sur des lignes de moulage fonctionnant en continu, en particulier pour fabriquer des produits de confiserie ; le procédé comportant les étapes consistant à alimenter au moins un premier (3) et un second (4) demi-moule d'une manière continue le long d'un trajet de moulage (P) via des moyens (10) formant convoyeur ; et déplacer les demi-moules (3, 4), lorsque ceux-ci sont alimentés vers l'avant, l'un par rapport à l'autre et vers et à partir d'une position fermée dans laquelle les demi-moules (3, 4) sont connectés de manière à définir le moule (2) desdits produits ; caractérisé en ce que les demi-moules (3, 4) sont alimentés vers l'avant en connectant d'une manière positive et libérable au moins ledit premier demi-moule (3) directement auxdits moyens (10) formant convoyeur ; et les demi-moules (3, 4) sont déplacés dans ladite position fermée en déconnectant, lorsque les demi-moules (3, 4) sont alimentés vers l'avant, au moins le premier demi-moule (3) à partir desdits moyens formant convoyeur, et en connectant le premier demi-moule (3) au second demi-moule (4).

2. Procédé selon la revendication 1, caractérisé en ce que lesdits demi-moules (3, 4) sont alimentés vers l'avant en connectant les deux demi-moules (3, 4) directement, et ce d'une manière libérable, auxdits moyens (10) formant convoyeur.

3. Procédé selon la revendication 1 ou 2, caractérisé en ce que lesdits demi-moules (3, 4) sont alimentés vers l'avant en articulant au moins ledit premier demi-moule (3) directement sur lesdits moyens (10) formant convoyeur via des moyens d'articulation libérables (18, 22).

4. Procédé selon la revendication 3, caractérisé en ce que lesdits demi-moules (3, 4) sont alimentés vers l'avant en articulant les deux demi-moules (3, 4) directement sur lesdits moyens (10) formant convoyeur.

5. Procédé selon l'une quelconque des revendications précédentes, caractérisé en ce que lesdits moyens formant convoyeur comportent deux éléments de convoyeur allongés (11) ; et ledit premier demi-moule (3) est déconnecté desdits moyens (10) formant convoyeur en faisant varier la distance existant entre lesdits éléments allongés (11) dans une direction (44) perpendiculaire audit trajet (P).

6. Procédé selon la revendication 5, caractérisé en ce que, avant de déconnecter ledit premier demi-moule (3) à partir desdits moyens (10) formant convoyeur, celui-ci comporte une opération pour immobiliser lesdits premier (3) et second (4) demi-moules l'un par rapport à l'autre via des moyens de saisie et de retenue (24).

7. Procédé selon la revendication 6, caractérisé en ce qu'il comporte aussi l'étape consistant à ajuster la position desdits moyens de saisie et de retenue (24) par rapport auxdits demi-moules (3, 4) dans deux directions incidentes.

8. Procédé selon la revendication 7, caractérisé en ce que ladite étape d'ajustement est exécutée durant ladite opération pour immobiliser les demi-moules (3, 4) l'un par rapport à l'autre.

9. Procédé selon l'une quelconque des revendications précédentes, caractérisé en ce que le premier demi-moule (3) est connecté au second demi-moule (4) en faisant tourner le premier demi-moule (3) autour d'un axe (44) perpendiculaire audit trajet (P).

10. Procédé selon l'une quelconque des revendications précédentes, caractérisé en ce qu'il comporte l'étape consistant à verrouiller les demi-moules (3, 4) l'un par rapport à l'autre lorsque ceux-ci se situent dans la position fermée.

11. Procédé selon l'une quelconque des revendications précédentes, caractérisé en ce que, après la formation dudit moule (2), celui-ci comporte une première étape pour déconnecter le moule (2) desdits moyens (10) formant convoyeur, et une seconde étape consécutive pour reconnecter le moule (2) auxdits moyens (10) formant convoyeur.

12. Système (la) pour connecter des moules sur des lignes de moulage fonctionnant en continu, en particulier pour fabriquer des produits de confiserie ; chaque moule (2) comportant un premier (3) et un second (4) demi-moule ; et le système (la) comportant des moyens (10) formant convoyeur pour alimenter lesdits demi-moules (3, 4) d'une manière continue le long d'un trajet de moulage (P) ; et des moyens opératoires (24) pour déplacer les demi-moules (3, 4), lorsque ceux-ci sont alimentés vers l'avant, l'un par rapport à l'autre et vers et à partir d'une position fermée dans laquelle les demi-moules (3, 4) sont connectés de manière à définir ledit moule (2) ; caractérisé en ce qu'il comporte des premiers moyens de connexion (18, 22) pour connecter d'une manière positive et libérable le premier demi-moule (3) directement auxdits moyens (10) formant convoyeur ; des moyens d'actionnement (11, lla) étant prévus pour déplacer lesdits premiers moyens de connexion (18, 22), lorsque les demi-moules (3, 4) sont alimentés vers l'avant, entre une position connectée, et une position de libération dans laquelle ledit premier demi-moule (3) est libéré desdits moyens (10) formant convoyeur et dans laquelle les demi-moules se situent dans la position fermée.

13. Système selon la revendication 12, caractérisé en ce qu'il comporte des seconds moyens de connexion (19, 22) pour connecter d'une manière positive et libérable le second demi-moule (4) directement auxdits moyens (10) formant convoyeur ; lesdits moyens d'actionnement (11, lla) permettant, en utilisation, de déplacer lesdits seconds moyens de connexion (19, 22) entre une position connectée respective, et une position de libération respective dans laquelle le second demi-moule (4) est libéré desdits moyens (10) formant convoyeur.

14. Système selon la revendication 13, caractérisé en ce que lesdits premiers moyens de connexion (18, 22) sont des moyens de connexion du type charnière.

15. Système selon la revendication 14, caractérisé en ce que lesdits seconds moyens de connexion (19, 22) sont des moyens de connexion du type charnière.

16. Système selon l'une quelconque des revendications 13 à 15, caractérisé en ce que lesdits moyens (10) formant convoyeur se constituent uniquement de deux éléments de convoyeur allongés (11) ; lesdits premiers (18, 22) et seconds (19, 22) moyens de connexion étant associés auxdits éléments allongés (11) ; et lesdits moyens d'actionnement (11, 11a) comportant lesdits éléments allongés (11), et des moyens de guidage (11a) pour faire varier la distance existant entre les éléments allongés (11) dans une direction (44) perpendiculaire audit trajet (P), et pour déplacer au moins les premiers moyens de connexion (18, 22) entre ladite position connectée et ladite position de libération.

17. Système selon les revendications 15 et 16, caractérisé en ce que lesdits premiers (18, 22) et seconds (19, 22) moyens de connexion, respectivement, comprennent une première et une seconde paire de tiges d'articulation (18, 19), les tiges (18, 19) de chaque paire étant situées de chaque côté dudit trajet (P), et chaque tige étant adaptée sur un demi-moule (3, 4) respectif ou sur un élément de convoyeur allongé (11) respectif ; lesdits premiers (18, 22) et seconds (19, 22) moyens de connexion comportant aussi, pour chaque paire de tiges (18, 19), une paire de sièges de retenue (22), avec chacun desquels vient en prise d'une manière positive une tige d'articulation (18, 19) respective, et qui sont formés chacun sur un élément de convoyeur allongé (11) respectif ou sur un demi-moule (3, 4) respectif.

18. Système selon la revendication 17, caractérisé en ce que les tiges (18, 19) de chaque paire sont alignées l'une avec l'autre, s'étendent perpendiculairement audit trajet (P), et sont chacune connectées d'un seul tenant à un élément de convoyeur allongé (11) respectif.

19. Système selon la revendication 17 ou 18, caractérisé en ce que chaque siège (22) présente une partie d'entrée évasée (22a) définissant, en utilisation, l'entrée d'une tige d'articulation (18, 19) respective.

20. Système selon l'une quelconque des revendications 12 à 19, caractérisé en ce qu'il comporte une station (8) pour fermer lesdits premier (3) et second (4) demi-moules, et située le long dudit trajet (P) ; et lesdits moyens opératoires (24) sont positionnés au niveau de ladite station de fermeture (8).

21. Système selon la revendication 20, caractérisé en ce que lesdits moyens opératoires (24) comportent des moyens de saisie et de retenue (35, 46) pour immobiliser lesdits demi-moules (3, 4) l'un par rapport à l'autre ; et des premiers moyens d'entraînement (28, 31) pour déplacer lesdits moyens de saisie et de retenue (35, 46) parallèlement audit trajet (P).

22. Système selon la revendication 21, caractérisé en ce que lesdits moyens opératoires (24) comportent aussi des moyens de positionnement relatif (40) pour ajuster la position desdits moyens de saisie et de retenue (35, 46) par rapport auxdits demi-moules (3, 4) dans deux directions incidentes.

23. Système selon la revendication 22, caractérisé en ce que lesdits moyens de positionnement comprennent un dispositif (40) avec des surfaces inclinées.

24. Système selon l'une quelconque des revendications 21 à 23, caractérisé en ce que, pour chaque demi-moule, lesdits moyens de saisie et de retenue comprennent une paire d'éléments (35, 46) en forme de fourchette de chaque côté dudit trajet (P) ; des deuxièmes moyens d'entraînement (48) étant prévus pour déplacer les éléments (35, 46) en forme de fourchette de chaque paire dans des directions opposées vers et à partir d'une position de retenue vers l'avant.

25. Système selon la revendication 24, caractérisé en ce que lesdits moyens opératoires (24) comprennent aussi d'autres moyens d'articulation (41, 42, 47) pour connecter lesdites paires d'éléments (35, 46) en forme de fourchette ; lesdits autres moyens d'articulation (41, 42, 47) présentant un autre axe d'articulation (44) perpendiculaire audit trajet (P) ; et des troisièmes moyens d'entraînement (43) étant prévus pour faire tourner l'une desdites paires d'éléments (35, 46) en forme de fourchette par rapport à l'autre et autour dudit autre axe d'articulation (44), et pour connecter ledit premier demi-moule (3) audit second demi-moule (4).

26. Système selon l'une quelconque des revendications 12 à 25, caractérisé en ce qu'il comporte d'autres moyens de connexion libérables (54) pour connecter lesdits demi-moules (3, 4) dans ladite position fermée ; lesdits autres moyens de connexion libérables (54) étant formés sur lesdits demi-moules (3, 4).
